Europäisches Patentamt

European Patent Office

Office européen des brevets

(19)

(11) Numéro de publication : **0 112 244**
**B1**

## (12) FASCICULE DE BREVET EUROPÉEN

(45) Date de publication du fascicule du brevet :
**09.11.88**

(51) Int. Cl.⁴ : **F 16 H  1/22, F 16 H  57/12,**
**G 05 D  3/14, F 41 F  21/14**

(21) Numéro de dépôt : **83402369.9**

(22) Date de dépôt : **08.12.83**

(54) **Perfectionnement aux dispositifs d'entraînement de charge.**

(30) Priorité : **15.12.82 FR 8221009**

(43) Date de publication de la demande :
**27.06.84 Bulletin 84/26**

(45) Mention de la délivrance du brevet :
**09.11.88 Bulletin 88/45**

(84) Etats contractants désignés :
**BE CH DE GB IT LI SE**

(56) Documents cités :
**EP-A- 0 014 028**
**EP-A- 0 078 855**
**FR-A-  948 803**
**GB-A- 1 089 025**
**SIEMENS FORSCHUNGS- UND ENTWICKLUNGSBE-**
**RICHTE, vol. 4, no. 2, 1975, pages 75-80, Springer-**
**Verlag, H.-P. Tröndle: "Regelung einer Spiegelan-**
**tenne"**

(73) Titulaire : **ETAT-FRANCAIS représenté par le DELE-**
**GUE GENERAL POUR L'ARMEMENT (DPAG)**
**Bureau des Brevets et Inventions de la Délégation**
**Générale pour l'Armement 26, Boulevard Victor**
**F-75996 Paris Armées (FR)**

(72) Inventeur : **Urvoy, Emile**
**2, rue du Docteur Debat**
**92380 Garches (FR)**

EP 0 112 244 B1

Jouve, 18, rue St-Denis, 75001 Paris, France

## Description

La présente invention a trait à un perfectionnement aux dispositifs d'entraînement de charge, c'est-à-dire aux dispositifs de motorisation utilisant ou non un réducteur pour motoriser une charge, perfectionnement destiné à augmenter l'efficacité des asservissements de mouvement, vitesse et position.

Dans les chaînes d'asservissement qui utilisent un motoréducteur pour motoriser la charge, les principales limitations aux performances en précision sont imposées par les caractéristiques du réducteur mécanique et notamment ses jeux internes. En outre, l'élasticité du motoréducteur, sous l'effet de l'inertie de la charge motorisée, limite généralement les possibilités de l'asservissement, possibilités qui peuvent encore être amoindries par l'augmentation du jeu au-delà d'une valeur liée à l'élasticité et au frottement dans la chaîne d'asservissement.

Le problème est le même dans les chaînes d'asservissement utilisant un motoréducteur ou une motorisation non mécanique, tel que par exemple un vérin hydraulique à double effet qui possède obligatoirement une certaine élasticité.

Pour limiter les inconvénients dus au jeu dans la chaîne, lorsque celui-ci ne peut pas être ramené à une valeur suffisamment faible compatible avec les performances attendues, on a déjà proposé diverses solutions de rattrapage de jeu. Une solution courante consiste à précontraindre chaque paire d'engrenages au voisinage du couple nominal ou maximum à transmettre mais une telle solution introduit des frottements supplémentaires dans la chaîne, augmente l'énergie à dissiper dans le réducteur et entraîne une usure prématurée de la mécanique.

On a également déjà prévu, par exemple dans le brevet FR 2 221 981, d'utiliser deux chaînes indépendantes et légèrement antagonistes pour supprimer les problèmes de contraintes précités. Une telle solution présente l'inconvénient de nécessiter deux moteurs.

Au demeurant, aucune de ces solutions ne résout les problèmes posés par l'élasticité du réducteur mécanique qui limite les possibilités dynamiques de l'asservissement.

Le document EP 0 014 028 montre un système de commande de la position angulaire d'un élément en rotation, plus particulièrement d'une tourelle et d'un canon sur laquelle il est monté, mais qui ne permet que de minimiser les effets de couples perturbateurs extérieurs, tels que ceux créés par le recul du canon lors du tir, en s'imposant d'ailleurs une faible inertie de la motorisation par rapport à la charge. La chaîne d'asservissement, ou plus exactement de compensation des couples perturbateurs extérieurs, prend en compte la mesure de la vitesse de la tourelle ou du canon lors de leur mouvement, et le signal de vitesse est intégré et superposé à tout signal de commande de la motorisation. Mais ce document ne donne aucune indication sur la prise en compte de l'élasticité propre de la chaîne de motorisation et mentionne au contraire un arbre présentant une grande rigidité ; la réduction du jeu entre les organes de transmission est imposée par construction, tout comme la faible inertie de la motorisation mais n'est absolument pas prise en compte pour modifier les paramètres d'asservissement.

Le document Siemens Forschungs- und Entwicklungsberichte, vol 4, N° 2, 1975, relatif à la motorisation d'une antenne réflectrice, montre, conforme aux caractéristiques du préambule de la revendication 1, une chaîne d'asservissement prenant en compte l'élasticité propre des moyens de motorisation qui comprennent deux moteurs et deux chaînes de réduction, en mesurant la différence des seules vitesses de rotation de la charge et des moyens de motorisation, avec les inconvénients relevés plus haut.

La présente invention a pour but d'affranchir la chaîne d'asservissement de l'élasticité de la transmission de façon que la motorisation soit comparable au cas d'un moteur-couple attelé directement sur la charge.

Un autre objectif de l'invention est de supprimer de façon simple le jeu apparent entre le moteur et la charge et ce sans introduire un couple supplémentaire à vaincre.

L'invention a pour objet une chaîne d'asservissement pour des moyens de motorisation, notamment un moto-réducteur ou un moteur, entraînant une charge comprenant des capteurs mesurant d'une partie les mouvements, vitesse ou position de la charge, et d'autre part des valeurs fournies par les moyens de motorisation, notamment pour tenir compte de leur élasticité, ces informations étant transmises à un dispositif d'asservissement régulant les moyens de motorisation en fonction des caractéristiques d'asservissement recherchées, caractérisée en ce que les moyens de réduction ou de motorisation présentent une élasticité accrue, supérieure ou égale à une valeur minimale imposée, et en ce que les valeurs fournies par les moyens de motorisation sont choisies parmi le couple, l'effort ou tout paramètre homogène à l'un de ces derniers.

Par couple, on entend suivant le cas, un couple mécanique ou hydraulique dans le cas d'une motorisation rotative. Par effort, on entend la force développée par une motorisation linéaire. Par paramètre homogène, on entend dans n'importe lequel des cas précédents un paramètre donnant une information similaire, abstraction faite des frottements et des limitations fréquentielles dues aux inerties réparties le long de la chaîne de transmission et aux bandes passantes propres des capteurs.

Ainsi, dans le cas par exemple d'un moteur hydraulique dont l'inertie propre est faible par rapport à celle d'un moteur électrique, le paramètre homogène choisi peut être la différence de pressions aux bornes du moteur hydraulique, laquelle peut utilement remplacer la mesure du couple, alors que, pour un moteur électrique, on sera amené à mesurer le couple lui-même.

Un autre paramètre homogène peut être, suivant les cas, l'accélération de la charge elle-même.

En fait, on choisira le paramètre utilisé en tenant compte des limites et caractéristiques propres des moyens de commande de la motorisation tels que par exemple l'amplificateur électrique d'un moteur ou une servovalve électrique ainsi que des caractéristiques inertielles et dynamiques propres des moyens moteurs de la motorisation.

La valeur minimale d'élasticité précitée est destinée à garantir une élasticité propre suffisamment grande, et ceci contrairement à l'enseignement de l'art antérieur qui, pour limiter les inconvénients liés à l'élasticité de transmission, cherche au contraire à minimiser l'élasticité propre des composants de la transmission.

La valeur minimale d'élasticité sera déterminée en fonction des conditions particulières d'utilisation.

Ainsi dans le cas où les perturbations des mouvement, vitesse ou position de la charge sont dues principalement aux imperfections de transmission de la motorisation on donnera à cette transmission une élasticité suffisante pour minimiser l'effet de ces imperfections sur le couple. Par exemple, l'élasticité sera suffisamment grande pour absorber les erreurs d'homocinétisme. En outre, l'élasticité accrue permet de mettre en œuvre des moyens particuliers de rattrapage de jeu, si nécessaire.

Dans le cas où les perturbations des mouvement, vitesse ou position de la charge sont dues principalement aux mouvements du support (cas par exemple d'un véhicule ou d'un navire), on donnera à la motorisation une élasticité suffisante pour interdire à ces perturbations de se propager à la charge, en ordonnant à l'asservissement de compenser la perturbation. Dans ce cas, la valeur minimale de l'élasticité dépendra d'une part de l'amplitude et des fréquences des perturbations et d'autre part de l'erreur maximale tolérée.

Dans certains cas, des motorisations déjà existantes peuvent posséder une élasticité suffisante jusqu'à présent considérée comme un inconvénient. On conserve alors cette élasticité et on détecte et traite les paramètres conformément à l'invention.

Dans le cas d'une motorisation par motoréducteur dont on veut également supprimer les jeux, on peut relier le moteur et la charge par deux chaînes de réduction dont les élasticités sont supérieures ou égales à une valeur minimale imposée, les deux chaînes étant légèrement précontraintes l'une sur l'autre d'une valeur liée aux erreurs d'homocinétisme entre le moteur et la charge, des moyens d'échappement étant prévus entre le moteur et chacune des chaînes de réduction pour que le moteur ne puisse transmettre par chaque chaîne qu'un couple de signe déterminé, différent pour chaque chaîne, des moyens étant prévus pour mesurer le couple mécanique fourni par le moteur.

La valeur de la précontrainte des deux chaînes l'une sur l'autre est liée aux erreurs d'homocinétisme entre le moteur et la charge et à l'usure des deux chaînes pendant la durée de vie normale du dispositif. On lui donne pratiquement une valeur légèrement supérieure à l'erreur d'homocinétisme. En général, ceci conduit à une précontrainte comprise entre 5 et 10 % du couple maximal à transmettre.

Selon un perfectionnement visant à améliorer encore le traitement du jeu apparent entre le moteur et la charge, on peut prévoir un léger couple dans chacune des chaînes d'asservissement par un ressort de grande élasticité pour maintenir, dans chaque chaîne, chaque paire d'engrenages en contact du même côté du jeu.

Le système d'échappement peut être un système tout à fait classique permettant à l'une des chaînes réductrices de transmettre à la charge le couple de rotation dans un sens, le couple de rotation en sens inverse étant transmis par l'autre chaîne, chaque chaîne ne pouvant transmettre un couple que dans le sens qui lui est attribué. Un tel échappement peut être réalisé par exemple par tout système d'embrayage unidirectionnel.

Pour des raisons pratiques, on peut cependant ne pas prévoir de système d'échappement en agençant les deux chaînes de telle sorte que d'une part, le jeu apparent entre le moteur et la charge n'existe pas et que d'autre part, en cas de changement de sens, dès que le jeu de la chaîne considérée est dépassé, celle-ci participe également à l'entraînement de la charge, ce qui permet de sousdimensionner mécaniquement l'ensemble du système.

Lorsqu'on mesure le couple mécanique fournie par un moteur, celui-ci peut être simplement obtenu directement sur l'axe du moteur.

En variante, le couple peut être obtenu en d'autres points de la transmission, par exemple au niveau d'un étage réducteur.

Dans le cas d'une motorisation à double chaîne de réduction on peut également, de façon avantageuse, mesurer le couple mécanique dans chacune des chaînes en additionnant les deux informations de couple avant l'exploitation.

La mesure de la déformation élastique délibérément introduite entre le moyen moteur et la charge constitue d'ailleurs un bon moyen d'obtenir l'information nécessaire.

Dans le cas d'un moyen moteur linéaire tel qu'un vérin hydraulique, l'effort peut être détecté par mesure de la différence de pressions de part et d'autre du piston. De même, dans le cas d'un moteur hydraulique tournant directement relié à la charge, on peut mesurer le couple par mesure de la différence de pressions à ses bornes.

Dans le cas d'un moteur tournant hydraulique, le paramètre homogène utilisé est avantageusement non pas le couple transmis mais la différence de pressions aux bornes du moteur, ce paramètre remplaçant avantageusement la mesure du couple mécanique.

De façon avantageuse dans le cas d'un moteur hydraulique linéaire ou tournant directement couplé à la charge, on introduit une élasticité artificielle supplémentaire sur l'huile, par exemple en reliant les chambres du moteur ou du vérin par exemple à un cylindre à piston flottant rappelé en position médiane par des moyens élastiques dont la valeur est calculée en fonction de l'élasticité à introduire.

Dans le cas d'une motorisation à moteur tournant hydraulique avec une ou deux chaînes de réduction ou une autre transmission, indépendamment de l'élasticité apportée selon l'invention à la chaîne de réduction ou à la transmission, on peut introduire avantageusement une élasticité artificielle sur l'huile du moteur contrairement à l'enseignement de l'art antérieur par les mêmes moyens afin de minimiser les effets des différentes non-linéarités inhérentes à la commande hydraulique et d'une façon générale améliorer également le fonctionnement dynamique du moteur lui-même par l'asservissement.

La mesure du mouvement, de la vitesse ou de la position de la charge peut être effectuée de toute façon connue avec la précision exigée par les performances recherchées pour l'asservissement.

Le moyen d'asservissement qui traite d'une part les informations relatives à la charge, d'autre part, celles correspondant au couple, effort ou autre paramètre homogène et qui est de préférence un moyen d'asservissement électronique, peut piloter les moyens de commande du moteur de toute façon connue.

Cependant, de préférence, dans le cas d'une motorisation électrique, le moyen d'asservissement sera prévu pour piloter l'amplificateur électronique d'un moteur électrique en s'appuyant sur les caractéristiques de l'amplificateur et du moteur.

Le moyen d'asservissement peut bénéficier des améliorations apportées au couple ampli-moteur par des contre-réactions connues de courant et vitesse moteur.

Le moyen d'asservissement peut par exemple être sensible à une consigne de position affichée de façon connue par l'utilisateur, ou à une consigne de vitesse ou encore aux deux. Ainsi pour un asservissement de position, on peut utiliser des circuits correcteurs du type P.D. ou, si la qualité du signal d'écart ne le permet pas, on peut réaliser un bouclage intermédiaire en vitesse.

L'invention peut recevoir de nombreuses applications. Ainsi, on peut l'utiliser pour l'asservissement et/ou la stabilisation d'une charge rotative ou pivotante comme par exemple une tourelle d'un véhicule blindé ou navire. Toutefois, l'invention pourra être également appliquée à d'autres systèmes, par exemple des machines-outils, robots, etc...

D'autres avantages et caractéristiques de l'invention apparaîtront à la lecture de la description suivante, faite à titre d'exemple non limitatif et se référant au dessin annexé:

La figure 1 représente un schéma d'un ensemble motoréducteur électrique selon l'invention.

La figure 2 représente une vue schématique de la partie mécanique de cet ensemble.

La figure 3 représente un graphique avec, en abscisse, la variation des différences angulaires entre l'arbre d'entrée et l'arbre de sortie d'un réducteur et, en ordonnée, le couple appliqué.

La figure 4 représente une vue schématique d'un ensemble selon l'invention, destiné à la stabilisation d'une arme en site motorisée par un vérin hydraulique.

La figure 5 représente un schéma d'un ensemble moto-réducteur hydraulique selon l'invention.

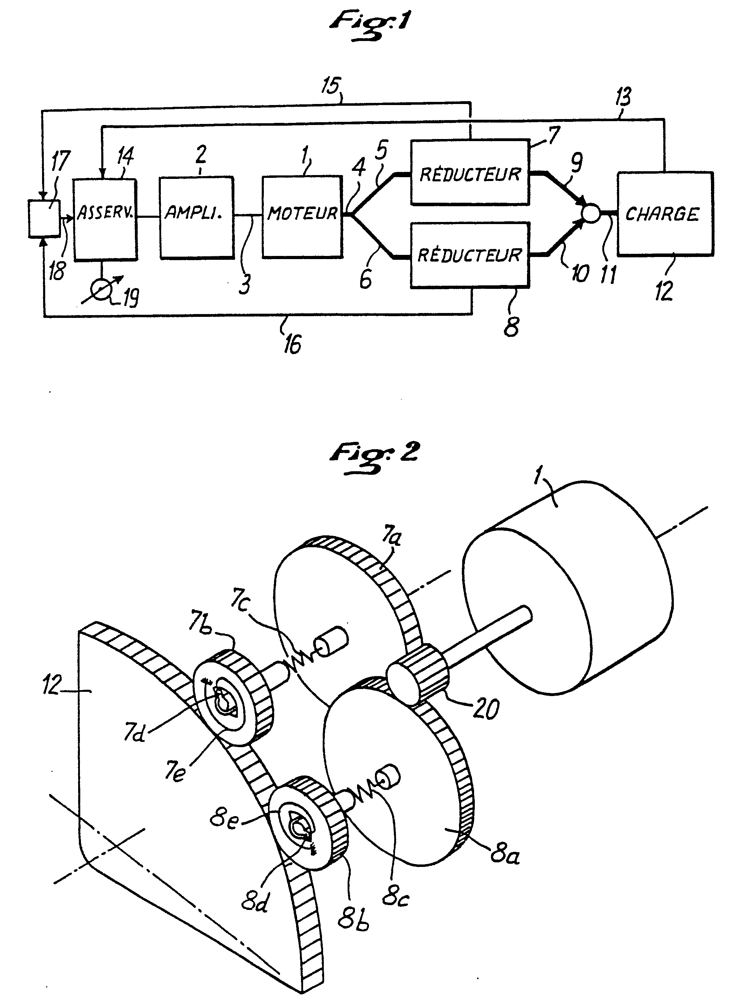

En se référant tout d'abord à la figure 1, on voit une représentation sous forme de schéma d'un dispositif d'entraînement d'une tourelle de véhicule blindé. Ce dispositif comporte un moteur électrique 1 commandé et alimenté par un amplificateur à transistors 2 par l'intermédiaire de lignes électriques 3. Un arbre 4 de sortie du moteur est renvoyé vers dérivations 5, 6 à deux réducteurs semblables 7, 8. A l'intérieur de chaque réducteur est prévu un système d'échappement faisant que le réducteur 7 n'est capable de transmettre que le couple à droite et le réducteur 8 n'est capable de transmettre que le couple à gauche. Des arbres 9, 10 des réducteurs sont renvoyés sur un arbre 11 d'une charge 12, à savoir une tourelle. Un capteur de position angulaire (non représenté) est disposé au niveau de la charge et renvoie un signal électrique fonction de la position, par un conducteur 13 aboutissant à des moyens d'asservissement composés d'un circuit électronique d'asservissement (dispositif d'asservissement) 14. Des détecteurs de couple (non représentés) sont également disposés dans les réducteurs 7 et 8 et, par des conducteurs correspondants 15, 16, les informations correspondant aux couples détectés sont transmises à un sommateur 17 puis, par une ligne 18, au circuit d'asservissement 14. Une consigne de position 19 est appliquée à l'asservissement soit manuellement, soit de toute autre façon .

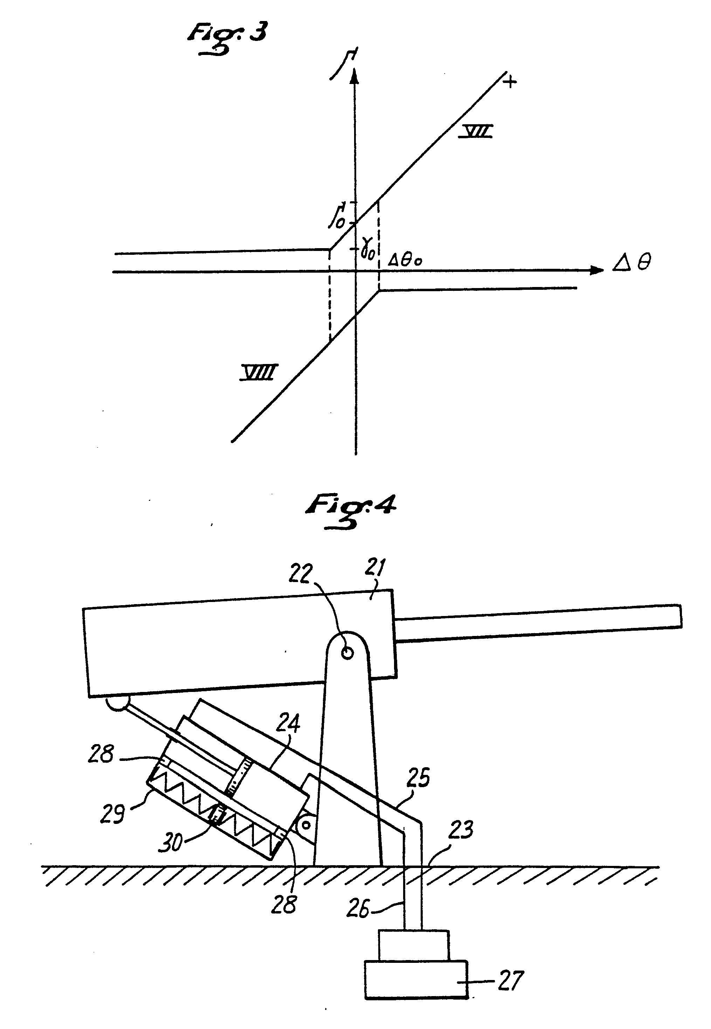

En se référant maintenant à la figure 2, on voit une forme particulière de réalisation de la partie mécanique dans laquelle l'arbre de sortie 4 du moteur électrique 1 porte un pignon 20 engrenant simultanément avec un grand pignon 7a du premier réducteur 7 et 8a du second réducteur 8, les arbres d'entrée (dérivations) 5 et 6 étant à proprement parler omis. Les grands pignons 7a, 8a engrènent directement sur une couronne faisant partie de la charge 12. En fait, les arbres coaxiaux des pignons 7a et 7b ne sont pas attelés rigidement l'un à l'autre mais sont reliés par l'intermédiaire d'un organe élastique 7c représenté de façon schématique, tel que par exemple une barre de torsion permettant d'établir des décalages élastiques angulaires entre les pignons 7a et 7b. L'élasticité ainsi introduite est nettement supérieure à l'élasticité faible que posséderait naturellement un court arbre reliant d'un seul bloc les pignons 7a et 7b. Il en est évidemment de même des pignons 8a et 8b qui sont reliés par l'organe élastique 8c. Enfin, on voit, à l'intérieur des pignons 7b et 8b, des dispositifs d'échappement qui font que le pignon 7b ne peut être moteur pour une couronne (charge) 12 que lorsqu'il tourne dans le sens anti-horaire alors que le pignon 8b ne peut être moteur pour la couronne 12 que lorsqu'il tourne dans le sens horaire. Ces dispositifs d'échappement peuvent être réalisés de façon simple en prévoyant sur l'arbre du petit pignon 7b ou 8b un doigt radial coopérant avec une butée du pignon pour l'entraîner lorsque le pignon 7b tourne dans le sens anti-horaire alors que, si le moteur tourne dans le sens entraînant le pignon dans le sens horaire, le doigt se dégage de sa butée et le pignon, prenant obligatoirement un certain retard du fait de l'élasticité, ne peut plus être menant mais reste mené, le pignon 8b étant alors menant. On a représenté schématiquement par 7d et 8d les doigts correspondants des arbres de pignons. Pour annuler le jeu susceptible d'exister en raison des décalages, de faibles ressorts 7e, 8e, schématiquement illustrés, maintiennent un léger couple de valeur $\gamma0$ pour maintenir chaque pignon 7b et 8b en contact d'engrenage du côté du jeu correspondant avec la denture de la couronne 12.

Conformément à l'invention, les deux chaînes cinématiques constituées par les deux réducteurs 7, 8 sont précontraintes l'une sur l'autre avec un couple de précontrainte $\Gamma0$. Cette précontrainte est obtenue au montage soit par un système de réglage continu verrouillé une fois la précontrainte établie, soit en se donnant la possibilité au montage de décaler à une dent près les engrenages 20 et 7a ou 8a.

Cette précontrainte est déterminée de façon que, compte tenu de l'élasticité propre à chaque chaîne, le jeu total apparent entre le moteur 1 et la charge 12, reste nul et ceci malgré les erreurs d'homocinétisme existant obligatoirement entre le moteur et la charge du fait des imperfections de dentures, des imperfections d'alignement d'axes, etc...

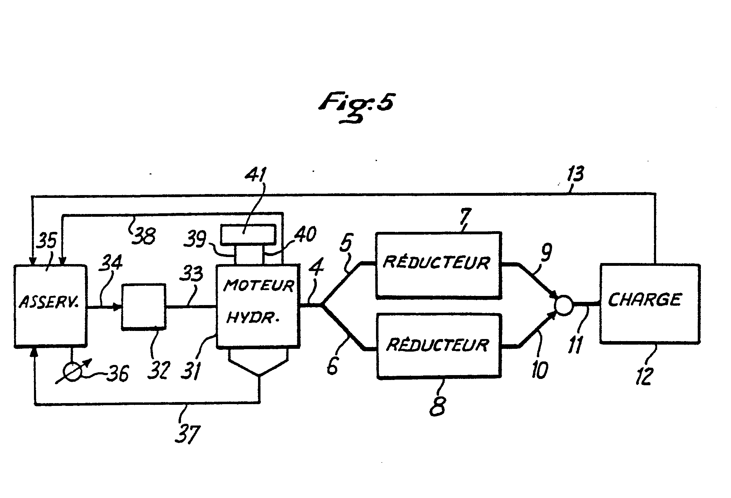

On voit sur la figure 3 les deux courbes VII et VIII montrant l'évolution du couple pour chacun des réducteurs 7, 8 en fonction de la variation angulaire, c'est-à-dire de la torsion entre l'entrée et la sortie de chacun des réducteurs, la courbe VII correspondant au réducteur 7 et la courbe VIII au réducteur 8.

Le capteur ou détecteur de couple permettant de détecter la torsion au niveau de la chaîne réductrice peut avantageusement mesurer la déformation de l'organe élastique 7c (ou 8c pour le détecteur de couple appartenant au réducteur 8). Les signaux électriques correspondants parviennent par les conducteurs 15 au sommateur 17 permettant d'additionner les deux informations de couple avant l'exploitation. Cependant, en variante, on pourrait également mesurer la torsion existant entre l'axe de sortie 4 du moteur 11 de la charge 12 ou, dans le cas de la réalisation selon la figure 2, de la couronne 12 formant partie de cette charge.

La vitesse angulaire de la charge 12 peut de préférence être captée à l'aide d'un capteur gyrométrique ou tachymétrique afin d'éviter d'avoir à dériver le signal d'écart de position qui serait fourni par un gyroscope ou un capteur de position quelconque. Le signal correspondant est dirigé par la ligne 13 vers le circuit d'asservissement 14.

Celui-ci, qui peut être d'un type quelconque, numérique ou analogique, reçoit donc d'une part, l'information correspondant à la position instantanée de la charge et d'autre part, l'information correspondant au couple résultant de la somme VII + VIII et, en conséquence, en fonction de l'écart détecté par rapport à la consigne affichée par le dispositif d'introduction de consigne 19, il pourra commander l'alimentation électrique du moteur 1 par le biais de l'amplificateur à transistors 2 et, dans ce but, pour élargir les possibilités dynamiques de l'attelage amplificateur 2 -moteur 1, on peut utilement faire appel aux contre-réactions connues de courant et de vitesse du moteur 1.

Dans l'exemple de réalisation représenté, la motorisation donne ainsi la possibilité d'une réalisation sans jeu apparent, l'élasticité introduite dans la chaîne double, et le capteur de couple associé étant principalement utilisée pour minimiser le couplage intrinsèque qui existe entre le support et la charge dans une motorisation à motoréducteur classique en deçà de la fréquence propre d'oscillation de la charge sur cette élasticité. L'asservissement de couple est utilisé dans un asservissement de position sur un gyroscope de référence, cet asservissement étant stabilisé par un gyromètre pour éviter de dériver le signal gyroscopique de qualité médiocre.

Le procédé permet d'une part de ne faire dépendre les limites dynamiques de l'asservissement de position que de celles du couple amplificateur 2 -moteur 1 et non de l'élasticité de la transmission. En d'autres termes, grâce à l'invention, la chaîne cinétique est pratiquement comparable au cas d'une charge directement accouplée sur l'arbre de sortie du moteur.

D'autre part, dans le cas où l'asservissement est effectué sur la base de références inertielles telles que gyroscope ou centrale à inertie, le dispositif selon l'invention permet de rendre l'asservissement insensible aux mouvements angulaires de la structure, telle que par exemple un châssis, sur laquelle la charge est montée de façon rotative.

On se réfère maintenant à la figure 4.

Dans cette forme de réalisation, on recherche la stabilisation en site (dénommé angle) d'une arme pivotant autour d'un pivot 22 solidaire d'une structure fixe mobile 23. La position angulaire de l'arme est déterminée par un vérin 24 convenablement articulé, du type à double effet, alimenté, à travers deux lignes hydrauliques 25, 26, par une servovalve 27 reliée à une source de pression et à une bâche (non représentées) pour alimenter, selon les besoins, l'une ou l'autre face du piston du vérin. Un circuit d'asservissement comparable au circuit 14 pilote la valve 27 en fonction d'une consigne de site affichée.

Conformément à l'invention, l'élasticité de la chaîne hydraulique est augmentée artificiellement, par exemple en reliant les deux chambres du vérin par des passages 28 à un cylindre 29 contenant un piston flottant 30 soumis à des ressorts antagonistes de raideur déterminée qui en limitent le mouvement.

On mesure, par exemple, par des capteurs manométriques placés dans les deux chambres du vérin 24, la différence des pressions hydrauliques dans les deux chambres pour un asservissement de couple, le signal électrique correspondant à la valeur de cette différence de pression étant adressé au circuit électronique d'asservissement de position ou de vitesse.

L'asservissement de couple n'est limité, dans ses possibilités que par les performances dynamiques de la servovalve 27 et par la qualité de la mesure de la pression différentielle.

Si on le désire, l'asservissement de position utilisant cette motorisation modifiée par l'élasticité artificielle sur l'huile et les retours d'effort associés peut éventuellement être amorti par un capteur de vitesse de pivotement de la charge pour éviter d'avoir à utiliser un réseau correcteur proportionnel et dérivé.

Dans cette utilisation de l'invention, l'élasticité artificiellement introduite dans la chaîne de motorisation a pour intérêt supplémentaire de s'affranchir des variations de la fonction de transfert entre la commande de la servovalve et la vitesse de la charge et ce en fonction de la vitesse moyenne de celle-ci.

En se référant à la figure 5, on voit une variante de l'invention dans laquelle un moteur hydraulique rotatif 31, alimenté à partir d'une source d'huile sous pression (non représentée) à travers une servovalve 32 et une conduite correspondante 33, entraîne la charge 12 par deux réducteurs 7 et 8, identiques à ceux de la figure 1 et ayant donc une élasticité accrue grâce aux moyens 7c, 8c.

La servovalve 32 est électriquement pilotée, grâce à une ligne 34, par un automatisme électronique d'asservissement 35 avec ses moyens d'entrée de consigne 36. Le dispositif d'asservissement 35 est sensible d'une part à la vitesse de rotation et/ou à la position de la charge 12 grâce à des capteurs convenables adressant leurs informations au dispositif 35 par la ligne 13 comme précédemment. Par contre, les couples mécaniques ne sont plus détectés, mais des capteurs de pression mesurant les pressions l'un à l'admission d'huile dans le moteur 31, l'autre à la sortie d'huile hors du moteur, sont montés de façon à adresser par une ligne 37 la valeur de la différence entre lesdites pressions, au dispositif d'asservissement 35.

On peut de plus rendre le dispositif d'asservissement 35 sensible à la vitesse de rotation du moteur hydraulique 31 grâce à un capteur tachymétrique lui adressant son information par une ligne 38.

De façon particulièrement avantageuse, le circuit d'huile du moteur 31 peut être rendu plus élastique en reliant ses deux chambres par des conduites respectives 39 et 40 à un cylindre 41 identique au cylindre 29.

La structure des dispositifs d'asservissement tels que 14, 35 dépend des utilisations recherchées et peut être facilement réalisée par l'homme de l'art. Le dispositif d'asservissement est sensible à l'écart entre la consigne et la situation réelle de la charge et agit pour réduire et annuler cet écart. Dans cette action, il tient compte de la valeur et/ou des variations des paramètres tels que couple, effort ou différence de pressions pour modifier sa réponse par anticipation des conditions demandées et pronostiquées par les capteurs.

**Revendications**

1. Chaîne d'asservissement pour des moyens de motorisation, notamment un moto-réducteur ou un moteur, entraînant une charge comprenant des capteurs mesurant d'une part les mouvement, vitesse ou position de la charge, d'autre part des valeurs fournies par les moyens de motorisation, notamment pour tenir compte de leur élasticité, ces informations étant transmises à un dispositif d'asservissement régulant les moyens de motorisation en fonction des caractéristiques d'asservissement recherchées, caractérisée en ce que les moyens de réduction ou de motorisation présentent une élasticité accrue, supérieure ou égale à une valeur minimale imposée, et en ce que les valeurs fournies par les moyens de motorisation sont choisies parmi le couple, l'effort ou tout paramètre homogène à l'un de ce derniers.

2. Chaîne d'asservissement selon la revendication 1, caractérisée en ce que, dans le cas de motorisations hydrauliques, (24, 31) le paramètre homogène utilisé est la différence de pression aux bornes d'un moteur hydraulique.

3. Chaîne d'asservissement selon la revendication 1, caractérisée en ce que le paramètre homogène utilisé est le résultat de l'accélération de la charge sur les moyens de motorisation.

4. Chaîne d'asservissement selon l'une quelconque des revendications 1 à 3, caractérisée en ce que la valeur de l'élasticité est suffisamment grande pour absorber les erreurs d'homocinétisme des moyens de motorisation.

5. Chaîne d'asservissement selon l'une quelconque des revendications 1 à 3, appliquée à une charge motorisée sur un support, caractérisée en ce que, dans le cas d'une charge susceptible d'être fortement perturbée par les mouvements du support portant la charge, la valeur de l'élasticité est suffisante pour interdire à ces perturbations de se propager à la charge grâce à l'asservissement de compensation.

6. Chaîne d'asservissement selon la revendication 1, caractérisée en ce que, dans le cas d'une motorisation par motoréducteur, on supprime les jeux en reliant le moteur (1, 31) et la charge (12) par deux chaînes de réduction (7, 8), les deux chaînes étant légèrement précontraintes l'une sur l'autre, des moyens d'échappement (7d, 8d) étant prévus entre le moteur et chacune des chaînes de réduction pour que le moteur ne puisse transmettre par chaque chaîne, qu'un couple de signe déterminé.

7. Chaîne d'asservissement selon la revendication 6, caractérisée en ce que l'on donne à ladite précontrainte une valeur légèrement supérieure à l'erreur d'homocinétisme.

8. Chaîne d'asservissement selon l'une quelconque des revendications 6 et 7, caractérisée en ce que l'on prévoit dans chacune des chaînes (7, 8) un léger couple par un ressort de grande élasticité (7e, 8e) pour maintenir dans chaque chaîne, chaque paire d'engrenages en contact du même côté du jeu.

9. Chaîne d'asservissement selon la revendication 1, caractérisée en ce que dans le cas d'une motorisation par motoréducteur, on relie le moteur (1, 31) et la charge (12) par deux chaînes de réduction (7, 8) légèrement précontraintes l'une sur l'autre de façon qu'il n'existe pas de jeu apparent entre le moteur et la charge, les deux chaînes participant à l'entraînement de la charge (12) quel que soit le sens de rotation.

10. Chaîne d'asservissement selon l'une quelconque des revendications 6 à 9 caractérisée en ce que l'on mesure le couple mécanique sur l'axe du moteur (1).

11. Chaîne d'asservissement selon l'une quelconque des revendications 6 à 9 caractérisée en ce que l'on mesure le couple au niveau d'un étage réducteur (7, 8).

12. Chaîne d'asservissement selon l'une quelconque des revendications 6 à 9 utilisant une motorisation à double chaîne de réduction (7, 8), caractérisée en ce que l'on mesure le couple mécanique dans chaque chaîne en additionnant les informations de couple avant l'exploitation.

13. Chaîne d'asservissement selon l'une quelconque des revendications 10 à 12, caractérisée en ce que l'on mesure la déformation élastique délibérément introduite entre le moyen moteur et la charge.

14. Chaîne d'asservissement selon l'une quelconque des revendications 1 à 5, caractérisée en ce que, dans le cas d'un moteur hydraulique linéaire (24) ou tournant directement couplé à la charge (21), on introduit une élasticité artificielle supplémentaire sur l'huile.

15. Chaîne d'asservissement selon l'une quelconque des revendications 1 à 5 et 6 à 9, caractérisée en ce que dans le cas d'une motorisation à moteur tournant hydraulique avec une chaîne de réduction ou transmission, on introduit indépendamment de l'élasticité apportée à la chaîne de réduction ou transmission, une élasticité artificielle supplémentaire sur l'huile du moteur.

16. Chaîne d'asservissement selon l'une des revendications 14 et 15, caractérisée en ce que l'on introduit ladite élasticité artificielle sur l'huile en reliant les chambres du moteur à un cylindre (29, 41) à piston flottant rappelé par ressort.

17. Chaîne d'asservissement selon l'une quelconque des revendications 1 et 6 à 13, caractérisée en ce que le dispositif d'asservissement (14) pilote un amplificateur électrique d'un moteur électrique en s'appuyant sur les caractéristiques de l'amplificateur et du moteur.

18. Chaîne d'asservissement selon l'une quelconque des revendications 2 et 14 à 16, caractérisée en ce que le dispositif d'asservissement (35) commande une servovalve (32).

## Claims

1. A servo-mechanism for motorization means, particularly a geared motor or a motor, driving a load comprising transducers for measuring the motion, velocity or position of the load, on the one hand, and the values supplied by the motorization means, on the other hand, particularly in order to take their elasticity into account, such information being transmitted to a servo-control unit regulating the motorization means as a function of the desired servo-control characteristics, characterized in that the reduction or motorization means have an increased elasticity, greater than or equal to a mandatory minimum value, and in that the values supplied by the motorization means are selected among the torque, the effort or any parameter homogeneous with one of the latter.

2. A servo-mechanism according to claim 1, characterized in that, in case of hydraulic motorizations (24, 31), the homogeneous parameter utilized is the difference of pressure at the terminals of a hydraulic motor.

3. A servo-mechanism according to claim 1, characterized in that the homogeneous parameter utilized is the result of the acceleration of the load on the motorization means.

4. A servo-mechanism according to any one of claims 1 to 3, characterized in that the elasticity value is great enough to absorb the homokinetics errors of the motorization means.

5. A servo-mechanism according to any one of claims 1 to 3, applied to a motorized load on a stand, characterized in that, in case of a load likely to be considerably disturbed by the motion of the stand carrying the load, the elasticity value is great enough to prevent such disturbances from extending to the load owing to the compensating servo-control unit.

6. A servo-mechanism according to claim 1, characterized in that, in case of a motorization by a geared motor, play is taken up by connecting the motor (1, 31) and the load (12) by two reduction chains (7, 8), the two chains being slightly prestressed to each other, release means (7d, 8d) being provided between the motor and each reduction chain for the motor to be capable of transmitting, through each chain, only a torque with a determined sign.

7. A servo-mechanism according to claim 6, characterized in that the said prestress is given a value slightly greater than the homokinetics error.

8. A servo-mechanism according to any one of claims 6 and 7, characterized in that in each chain (7, 8) a slight torque is provided by a high- elasticity spring (7e, 8e) intended to keep, in each chain, each pair of gears in contact on the same side of the play.

9. A servo-mechanism according to claim 1, characterized in that, in case of a motorization by a geared motor, the motor (1, 31) and the load (12) are connected by two reduction chains (7, 8) slightly prestressed to each other so that there is no apparent play between the motor and the load, both chains contributing to the drive of the load (12) whatever the direction of rotation.

10. A servo-mechanism according to any one of claims 6 to 9, characterized in that the mechanical torque is measured on the motor shaft (1).

11. A servo-mechanism according to any one of claims 6 to 9, characterized in that the torque is measured at the location of a reducing stage (7, 8).

12. A servo-mechanism according to any one of claims 6 to 9 using a motorization with two reduction chains (7, 8), characterized in that the mechanical torque is measured in each chain by adding the torque data before processing.

13. A servo-mechanism according to any one of claims 10 to 12, characterized in that the elastic deformation deliberately introduced is measured between the motor and the load.

14. A servo-mechanism according to any one of claims 1 to 5, characterized in that, in the case of a linear hydraulic motor (24) or a revolving hydraulic motor coupled with the load (21), an additional artificial elasticity is introduced on the oil.

15. A servo-mechanism according to any one of claims 1 to 5 and 6 to 9, characterized in that, in case of a revolving hydraulic motor with a reduction or transmission chain, an additional artificial elasticity is introduced on the motor oil, independently of the elasticity given to the reduction or transmission chain.

16. A servo-mechanism according to claims 14 and 15, characterized in that the said artificial elasticity is introduced on the oil by connecting the chambers of the one-cylinder engine (29, 41) fitted with a spring-loaded floating piston.

17. A servo-mechanism according to any one of claims 1 and 6 to 13, characterized in that the servo device (14) controls the electric amplifier of an electric motor according to the characteristics of the amplifier and of the motor.

18. A servo-mechanism according to any one of claims 2 and 14 to 16, characterized in that the servo-device (35) controls a servovalve (32).

**Patentansprüche**

1. Regelungskette für Antriebsmittel, insbesondere für Motor oder Getriebemotor zum Antrieb einer Last, bestehend u. a. aus Meßwertgebern, die einerseits die Bewegung, die Geschwindigkeit oder die Lage der Last und andererseits die durch die Antriebsmittel ermittelten Werte, insbesondere zur Berücksichtigung deren Elastizität, messen, wobei diese Daten einer Regelungsvorrichtung zur Berechnung der Antriebsmittel-Steuerdaten anhand der bevorzugten Regelungscharakteristiken übermittelt werden, dadurch gekennzeichnet, daß die Antriebs- bzw. Kraftübertragungsglieder eine gesteigerte Elastizität aufweisen, die größer als oder gleich einem festgelegten Mindestwert ist, und daß die durch die Antriebsmittel ermittelten Daten unter dem Moment, der Antriebskraft oder jeglichem mit einem dieser beiden erwähnten Meßwerten homogenen Parameter gewählt werden.

2. Regelungskette nach Anspruch 1, dadurch gekennzeichnet, daß im Falle eines hydraulischen Antriebes (24, 31), der verwendete homogene Parameter aus dem Druckunterschied zwischen den Einlauf- bzw. Auslaufstutzen eines Hydromotors besteht.

3. Regelungskette nach Anspruch 1, dadurch gekennzeichnet, daß der verwendete homogene Parameter das Ergebnis der Auswirkung der Lastbeschleunigung auf den Antriebsmitteln darstellt.

4. Regelungskette nach einem beliebigen Anspruch 1 bis 3, dadurch gekennzeichnet, daß der Elastizitätswert genügend groß ist, um die Gleichgangsfehler der Antriebsmittel aufzunehmen.

5. Regelungskette nach einem beliebigen Anspruch 1 bis 3, in der Anwendung an einer auf einer Halterung gestützten, angetriebenen Last, dadurch gekennzeichnet, daß im Falle einer Last, die durch die Bewegungen dessen Halterung sehr gestört werden kann, der Elastizitätswert genügend ist, um zu bewirken, daß dank einer entsprechenden Ausgleichsregelung diese Störungen nicht zur Last übertragen werden können.

6. Regelungskette nach Anspruch 1, dadurch gekennzeichnet, daß im Falle eines Antriebes über Getriebemotor die Spiele durch Verbindung des Motors (1, 31) und der Last (12) über zwei Getriebesätze (7, 8) ausgeschaltet werden, wobei die beiden Getriebesätze leicht gegeneinander vorgespannt werden und wobei Hemmungsvorrichtungen (7d, 8d) zwischen dem Motor und jedem dieser Getriebesätze vorgesehen sind, um zu sichern, daß der Motor über jeden Getriebesatz nur ein Moment mit einem bestimmten Vorzeichen übertragen kann.

7. Regelungskette nach Anspruch 6, dadurch gekennzeichnet, daß die erwähnte Vorspannung einem Wert entspricht, der etwas größer als der Gleichgangsfehler ist.

8. Regelungskette nach einen beliebigen Anspruch 6 oder 7, dadurch gekennzeichnet, daß in jedem Getriebsatz (7, 8) eine hochelastische Feder (7e, 8e) ein leichtes Moment zur Aufrechterhaltung, in jedem Getriebesatz, eines ständigen Kontaktes der Zahnradpaare auf der Auswirkungsseite des Flankenspieles erzeugt.

9. Regelungskette nach Anspruch 1, dadurch gekennzeichnet, daß im Falle eines Antriebes über Getriebemotor, der Motor (1, 31) und die Last (12) über zwei gegeneinander leicht vorgespannte Getriebesätze (7, 8) verbunden sind, um das scheinbare Spiel zwischen Motor und Last auszuschalten, wobei die beiden Getriebesätze zum Antrieb der Last (12) beitragen, welche auch die Drehrichtung sein mag.

10. Regelungskette nach einem beliebigen Anspruch 6 bis 9, dadurch gekennzeichnet, daß das mechanische Moment auf der Motorabtriebsachse (1) gemessen wird.

11. Regelungskette nach einem beliebigen Anspruch 6 bis 9, dadurch gekennzeichnet, daß das mechanische Moment auf einer Stufe des Getriebes (7, 9) gemessen wird.

12. Regelungskette nach einem beliebigen Anspruch 6 bis 9, über einen doppelten Getriebesatz (7, 8) angetrieben, dadurch gekennzeichnet, daß das mechanische Moment in jedem Getriebesatz gemessen wird und daß die Momentmeßwerte vor Auswertung addiert werden.

13. Regelungskette nach einem beliebigen Anspruch 10 bis 12, dadurch gekennzeichnet, daß die vorbedachtlich zwischen dem Antriebsmotor und der Last eingefügte elastische Verformung gemessen wird.

14. Regelungskette nach einem beliebigen Anspruch 1 bis 5, dadurch gekennzeichnet, daß im Falle eines linearen hydraulischen Antriebes (24) oder eines unmittelbar mit der Last gekoppelten, rotierenden Hydromotores (21) eine zusätzliche künstliche Elastizität über das Drucköl zugefügt wird.

15. Regelungskette nach einem beliebigen Anspruch 1 bis 5 und 6 bis 9, dadurch gekennzeichnet, daß im Falle eines Antriebes mit über Getriebe oder Kraftübertragung gekoppelten, rotierenden Hydromotor eine zusätzliche künstliche Elastizität über das Drucköl des Motors zugefügt wird.

16. Regelungskette nach einem beliebigen Anspruch 14 oder 15, dadurch gekennzeichnet, daß die erwähnte künstliche Elastizität durch Verbindung der Einlaß- bzw. Auslaßkammer des Motors mit Hilfe eines Zylinders (29, 41), dessen Kolben frei gegen Federdruck schwebt, zugefügt wird.

17. Regelungskette nach einem beliebigen Anspruch 1 und 6 bis 13, dadurch gekennzeichnet, daß die Regelungsvorrichtung (14) einen elektrischen Verstärker zur Versorgung eines Elektromotors anhand der Charakteristiken des Verstärkers und des Motors steuert.

18. Regelungskette nach einem beliebigen Anspruch 2 und 14 bis 16, dadurch gekennzeichnet, daß die Regelungsvorrichtung (35) ein Servoventil (32) steuert.

0 112 244

*Fig. 1*

*Fig. 2*

1

Fig. 3

Fig. 4

Fig.5